# EUROPÄISCHE PATENTANMELDUNG

(11) **EP 1 369 674 A2**
(43) Veröffentlichungstag der Anmeldung: **10.12.2003**
(21) Anmeldenummer: 03011151.2
(22) Anmeldetag: 23.05.2003
(51) Int. Cl.: G01K 1/14

(54) **Magnetisch befestigbarer Garprozessfühler**

(30) Priorität: 03.06.2002 DE 20208573 U
(71) Anmelder: FRIMA SA, 68271 Wittenheim Cedex (FR); Rational AG, 86899 Landsberg/Lech (DE)
(72) Erfinder: Renaud, Frédéric, 68100 Mulhouse (FR); Wagner, Stefan, 38127 Oberhergheim (FR); Michineau, Serge, 68190 Ensisheim (FR)
(74) Vertreter: Weber-Bruls, Dorothée, Dr.

(57) **Zusammenfassung**

Die Erfindung betrifft einen insbesondere an einem Gargerät magnetisch befestigbaren Garprozessfühler sowie ein Gargerät und insbesondere einen Garbehälterdeckel mit mindestens einem magnetisch befestigbaren Garprozessfühler.

## Beschreibung

Die vorliegende Erfindung betrifft einen magnetisch befestigbaren Garprozessfühler mit mindestens einer Spitze und einem Griff, sowie Gargeräte, insbesondere Garbehälterdeckel enthaltend einen magnetisch befestigbaren Garprozessfühler.

Gattungsgemäße Garprozessfühler sind beispielsweise aus der DE 299 23 215 U1, WO 99/37981 und GB 682,005 bekannt. Diese bekannten Garprozessfühler verfügen regelmäßig über eine Spitze, umfassend ein Einführende, und einen Griff, wobei die Spitze in der Regel mit Sensoren, z.B. Temperatursensoren, ausgestattet ist, und über das Einführende in das Gargut einführbar ist. Die Spitze kann auch einen Schaft umfassen, der üblicherweise vom Griff aufgenommen wird. Die über einen Garprozessfühler ermittelten Kern- und/oder Oberflächentemperaturen können, beispielsweise über ein Kabel, an eine Steuer- und/oder Regeleinheit des Gargerätes weitergeleitet werden.

Garprozessfühler sind funktionsbedingt regelmäßig mit sehr scharfkantigen oder nadelförmigen Spitzen bzw. Einführenden ausgestattet, um gegebenenfalls auch in noch nicht vollständig gegartes Gargut eingeführt werden zu können, ohne daß dabei der Garprozessfühler oder das Gargut in Mitleidenschaft gezogen werden. Ein unachtsamer Umgang mit Garprozessfühlern ist daher, auch um der Gefahr von Verletzungen vorzubeugen, auf jeden Fall zu vermeiden.

Da in Garbehältern unterschiedlichste Gargüter zubereitet werden, kommt es vor, daß ein Garprozessfühler für ein bestimmtes Gargut ungeeignet ist, und durch einen besser geeigneten Garprozessfühler ersetzt werden muß. Sind für eine flexible Handhabung von Garprozeßfühlern keine besonderen Vorkehrungen getroffen worden, führt dieses häufig zu Verwechslungen und erschwert ein reibungsloses Arbeiten insbesondere auch in Großküchen. Ferner können Garprozessfühler mit unterschiedlichen Sensoren bzw. mit einer unterschiedlichen Anzahl an Sensoren ausgestattet sein, weshalb diese sich häufig auch hinsichtlich Größe und Gewicht unterscheiden. Demgemäß kann sich eine für einen bestimmten Garprozessfühler geeignete Halterung für ein anderes Modell als ungeeignet erweisen.

Indem Garprozessfühler häufig ein integraler Bestandteil eines Gargerätes, insbesondere in Großküchen, sind, besteht nach jedem Garvorgang die Notwendigkeit, auch den Garprozessfühler sowie insbesondere dessen Halterung mit zu reinigen. Insbesondere bei in Großküchen verwendeten Gargeräten ist es jedoch von Vorteil, wenn sich das gesamte Gargerät unkompliziert, einfach und hygienisch zuverlässig reinigen läßt. Separate Halterungselemente haben sich hierbei jedoch als hinderlich erwiesen und sind häufig Ursache von Verletzungen.

Es wäre daher wünschenswert auf Garprozessfühler bzw. Gargeräte zurückgreifen zu können, die nicht mit den vorgenannten Nachteilen des Standes der Technik behaftet sind.

Der vorliegenden Erfindung lag daher die Aufgabe zu Grunde, den gattungsgemäßen Garprozessfühler derart weiter zu entwickeln, daß die Nachteile des Standes der Technik überwunden werden, wobei der erfindungsgemäße Garprozessfühler insbesondere einfach und zuverlässig, z. B. an einem Gargerät, anbringbar und auch wieder entfernbar ist, wobei zudem das Reinigen von separaten Halterungen für solche Garprozessfühler entfallen und wobei schließlich auch die Verletzungsgefahr bei der Handhabung und bei der Reinigung von Garprozessfühlern erheblich verringert werden kann.

Diese Aufgabe wird erfindungsgemäß dadurch gelöst, daß
der Garprozessfühler zumindest an und/oder in einem Gargerät magnetisch befestigbar ist.

Dabei ist erfindungsgemäß vorgesehen, daß
der Garprozessfühler im und/oder am Griff und/oder in und/oder an der Spitze mindestens einen, insbesondere austauschbaren, Permanentmagneten und/oder, insbesondere steuerbaren, Elektromagneten und/oder mindestens einen Bereich aus, insbesondere austauschbarem, magnetisierbarem Material für die Befestigung an einer magnetischen oder magnetisierbaren Halterung an einem Gargerät umfasst.

In einer Ausführungsform der Erfindung zeichnen sich der Garprozessfühler demgemäß dadurch aus, daß
der Griff oder die Spitze zumindest segmentweise Permanent- oder Elektromagnetmaterial oder magnetisierbares Material enthält oder, zumindest abschnittsweise, vollständig oder nahezu vollständig, kontinuierlich oder diskontinuierlich mit mindestens einem Permanent- oder Elektromagneten oder mit magnetisierbarem Material ummantelt ist.

Weiterhin ist erfindungsgemäß vorgesehen, daß
das magnetisierbare Material und/oder der Permanent- oder Elektromagnet und/oder der Wirkbereich des magnetisierbaren Materials und/oder des Permanent- oder Elektromagneten des Garprozessfühlers optisch und/oder haptisch identifizierbar bzw. kenntlich gemacht ist.

Der erfindungsgemäße Garprozessfühler setzt sich üblicherweise wenigstens aus einem Griff und einer mit diesem Griff, gegebenenfalls über einen Schaft, verbundenen Spitze, enthaltend an ihrem freien Ende üblicherweise ein Einführende, zusammen. Das Einführende kann z.B. auch im wesentlichen gabelförmig, beispielsweise mit zwei Gabelspitzen, ausgebildet sein. Zwecksmäßigerweise ist die Spitze im allgemeinen nadel- oder zylinderförmig ausgeführt, wobei die Querschnittsfläche in weiten Bereichen variierbar ist. Die Spitze kann geradlinig oder auch gekrümmt bzw. gebogen ausgebildet sein. In der Spitze oder dem Einführende, gegebenenfalls auch in dem Schaft und/oder dem Griff des Garprozessfühlers können jeweils ein oder mehrere Sensoren zur Bestimmung von spezifischen Eigenschaften des Gargutes wie z.B. Temperatur, Feuchtegehalt, pH-Wert oder Zuckergehalt vorliegen. Der erfindungsgemäße Garprozessfühler wird üblicherweise zur Bestimmung der Innentemperatur von Gargut jeder Art eingesetzt.

Geeignete magnetisierbare Materialien sowie Permanent- und Elektromagnete sind dem Fachmann bekannt und sind auch im Handel kommerziell erhältlich. In einer Ausführungsform der Erfindung ist ein Garprozessfühler vorgesehen, bei dem man installierte Permanentund Elektromagnete sowie magnetisierbare Materialien ohne größeren Aufwand gegen z.B. andere Permanent- oder Elektromagnete, z. B. solche mit geringerer oder größerer Magnetstärke, austauschen kann. Auf diese Weise gelingt auf einfache Art eine Anpassung an individuelle Arbeitsbedingungen. Insbesondere bei Verwendung von Elektromagneten hat es sich als vorteilhaft erwiesen, daß die Stärke der Anbindung bereits geregelt werden kann, ohne daß der Elektromagnet ausgetauscht werden muss. Vielmehr reicht es in den meisten Fällen aus, über eine ansteuerbare Erhöhung oder Verringerung der Stromstärke ein stärkeres bzw. schwächeres Magnetfeld und damit auch eine stärkere bzw. schwächere Haftung zu induzieren.

Die erfindungsgemäßen Garprozessfühler können z. B. über einen Kabelanschluß mit einer Kontroll- und/oder Steuereinheit verbunden sein. Alternativ können die ermittelten Daten auch drahtlos über einen integrierten Sender an eine Kontroll- und/oder Steuereinheit weitergeleitet werden.

Der erfindungsgemäße Garprozessfühler kann ohne Weiteres an magnetischen oder magnetisierbare Flächen angebracht werden und ermöglicht somit bereits eine sichere und gefahrlose Handhabung.

Gemäß einem weiteren Aspekt der vorliegenden Erfindung ist ein Gargerät, umfassend mindestens einen Garbehälter, vorzugsweise mit Garbehälterdeckel, vorgesehen, wobei
das Gargerät, insbesondere der Garbehälterdeckel, innen- und/oder aussenseitig mindestens einen Bereich aus magnetisierbarem Material und/oder mindestens einen, insbesondere austauschbaren, Permanent- und/oder, insbesondere steuerbaren, Elektromagneten, insbesondere für die mittelbare oder unmittelbare magnetische Befestigung eines erfindungsgemäßen Garprozessfühlers, umfasst.

In einer bevorzugten Ausführungsform verfügt das Gargerät über
mindestens einen, insbesondere mit dem Gargerät in Wirkverbindung stehenden, erfindungsgemäßen Garprozessfühler, der, insbesondere innenseitig, mittelbar oder unmittelbar magnetisch befestigbar ist.

Der magnetisierbare Bereich oder der Permanent- oder Elektromagnet kann demgemäß in einer Ausfuhrungsform selber die Oberfläche oder einen Teil der Oberfläche des Garprozessfühlers und/oder des Gargerätes bilden. Beispielsweise kann hierfür ein magnetisierbares Material oder ein Permanentmagnet in ein Oberflächenmaterial, z.B. eine Gargerätewand oder in das Griffgehäuse eingelassen sein. Wird eine Haftung über derartige Bereiche erzeugt, liegt im Sinne der Erfindung eine unmittelbare magnetische Haftung vor. Insbesondere bei Verwendung starker Magnete ist gemäß einer weiteren Ausführungsform der Erfindung vorgesehen, magnetisierbare Materialien oder Permanent- oder Elektromagnete zu verwenden, die im Bereich der Haftfläche mit einer Wand bzw. (Schutz-)Schicht aus nicht magnetisierbarem oder magnetisierbarem Material beschichtet sind. Bei einer Anbindung an solche Bereiche liegt eine mittelbare magnetische Haftung im Sinne der Erfindung vor. Beispielsweise kann in einer Gargerätewandung auf der dem Gargeräteinnenraum abgewandten Fläche eine Auslassung für die Aufnahme eines Permanentmagneten vorgesehen sein. Der Permanentmagnet kann dann z.B. zu einer temporären Magnetisierung der unterliegenden Wandfläche, an der ein Garprozessfühler anbringbar ist, beitragen, wodurch eine mittelbare magnetische Haftung über den Permanentmagneten stattfindet. Diese Wandfläche kann z.B. auch als dünne, nicht magnetisierbare Schutzschicht oder -folie ausgestaltet sein.

Ferner wird in einer erfindungsgemäßen Ausführungsform darauf abgestellt, daß
das magnetisierbare Material und/oder der Permanent- oder Elektromagnet und/oder der Wirkbereich des magnetisierbaren Materials und/oder des Permanent- oder Elektromagneten des Gargeräts optisch und/oder haptisch identifizierbar bzw. kenntlich gemacht ist. Unter Garbedingungen beständige Markierungen können z.B. mittels Lasertechnik, Serigraphie oder mechanischer Techniken erzeugt werden.

Erfindungsgemäße Gargeräte können z.B. ausgehend von den in DE 100 17 966 A1, DE 198 38 864 A1 und DE 199 55 820 A1 offenbarten Gargeräten erhalten werden.

Besonders bevorzugt liegt der erfindungsgemäße Garprozessfühler magnetisch befestigt an dem Garbehälterdeckel, insbesondere an dessen Innenseite, vor.

Demgemäß ist in einer bevorzugten Ausgestaltung der Erfindung ein Garbehälterdeckel vorgesehen,
der innen- und/oder aussenseitig mindestens einen Bereich aus magnetisierbarem Material und/oder mindestens einen, insbesondere austauschbaren, Permanent- und/oder, insbesondere steuerbaren, Elektromagneten, insbesondere für die mittelbare oder unmittelbare magnetische Befestigung eines erfindungsgemäßen Garprozessfühlers, umfasst.

Dabei verfügt der Garbehälterdeckel in einer bevorzugten Ausführungsform über mindestens einen, insbesondere mit dem Gargerät in Wirkverbindung stehenden, erfindungsgemäßen Garprozessfühler, der, insbesondere innenseitig, mittelbar oder unmittelbar magnetisch befestigbar ist.

Des weiteren wird in einer erfindungsgemäßen Ausführungsform des Garbehälterdeckels darauf abgestellt, daß
das magnetisierbare Material und/oder der Permanent- oder Elektromagnet und/oder der Wirkbereich des magnetisierbaren Materials und/oder des Permanent- oder Elektromagneten des Garbehälterdeckels optisch und/oder haptisch identifizierbar bzw. kenntlich gemacht ist.

Es hat sich demgemäß als vorteilhaft erwiesen, die magnetischen oder magnetisierbaren Bereiche am Gargerät und/oder am Garprozessfühler, die für eine magnetische Befestigung in Frage kommen, in entsprechender Weise kenntlich zu machen. Insbesondere auch, weil diese Bereiche vorzugsweise in die umliegenden Oberflächen eingelassen werden können und sich nicht oder nicht mehr sonderlich von der umgebenden Fläche abheben. Dieses ist vor allem auch dann der Fall, wenn Magnet oder magnetisierbare Fläche mit einer Schicht versehen sind, die sich von der sonstigen Oberfläche nicht unterscheidet.

Ein erfindungsgemäßer Garbehälterdeckel umfaßt selbstverständlich z.B. auch Tiegeldeckel sowie, insbesondere bei großtechnischem Einsatz, Garbehältertüren.

Mit dem erfindungsgemäßen Garprozessfühler, Gargerät bzw. Garbehälterdeckel wird auf sehr unaufwendige Weise ein sicherer und einfacher Zugriff auf einen Garprozessfühler gewährleistet. Ferner wird eine sichere Halterung für einen Garprozessfühler geschaffen. Weder besteht die Gefahr, den Garprozessfühler zu verlegen, noch die Notwendigkeit, den Garprozessfühler mit einer Sendereinheit zur drahtlosen Übermittlung der gemessenen Ergebnissen auszustatten. So kann beispielsweise ein erfindungsgemäßer Garprozessfühler über ein am und/oder im Behälterdeckel geführtes Kabel mit einer Steuer- und Regeleinheit eines Gargerätes in Verbindung stehen.

Mit dem erfindungsgemäßen Garprozessfühler, Gargerät bzw. Garbehälterdeckel wird die Handhabung, insbesondere die Anbringung und das Entnehmen von Garprozessfühlern in bzw. aus z.B. Gargeräten erleichtert, wobei auch das Risiko, sich zu verletzen, erheblich verringert wird. Indem die magnetisierbaren oder magnetischen Halterungen Bestandteil des Garprozessfühlers, des Gargerätes bzw. des Behälterdeckels sind oder in diese eingelassen sind, entfällt ein zusätzlicher Reinigungsschritt. Auch hierdurch wird die Verletzungsgefahr beim Reinigen nachhaltig verringert. Von Vorteil ist weiterhin, daß, wenn z. B. in einem Gargerät ein Garprozessfühler ausgetauscht werden soll, der sich z. B. in Größe oder Gewicht von dem zuvor eingesetzten unterscheidet, eine sichere Halterung bereits dadurch erreicht wird, daß man entweder den Permanent- und/oder Elektromagneten gegen einen geeigneteren austauscht oder daß man, bei Verwendung eines Elektromagneten, dessen Magnetstärke neu einstellt.

Weitere Merkmale und Vorteile der Erfindung ergeben sich aus der nachfolgenden Beschreibung bevorzugte Ausführungsbeispiele unter Bezugnahme auf schematische Zeichnungen. Dabei zeigen:
- Figur 1: eine Seiteneinsicht eines an einer Auflage befestigten erfindungsgemäßen Garprozessfühler im Längsschnitt;
- Figur 2: einen schematischen Querschnitt durch den Gehäusedeckel eines erfindungsgemäßen Gargerätes; und
- Figur 3: eine schematische Draufsicht auf einen Gehäusedeckel.

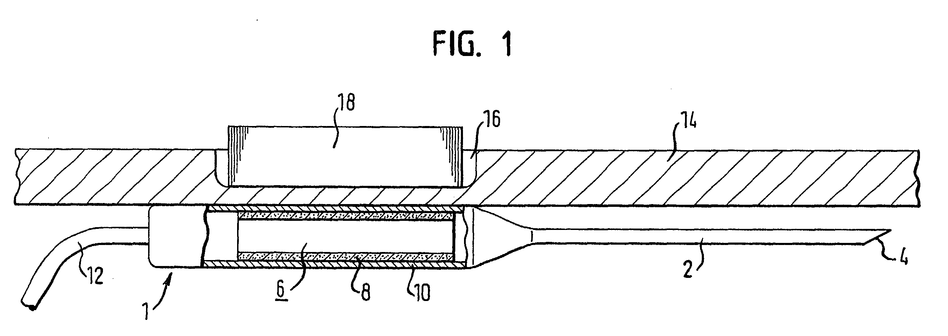

Der Garprozessfühler 1 gemäß der Erfindung, der in Figur 1 dargestellt ist, umfaßt eine geradlinige zylinderförmige Spitze 2 sowie ein Einführende 4 mit abgeschrägter Grundform. Der Griff 6 ist umlaufend mit einer Schicht 8 aus magnetischem Material umgeben, wobei dieses Material selber wiederum von einer dünnen Griffhülle 10 umgeben ist. Der Garprozessfühler 1 steht über das Kabel 12 in Verbindung mit einer Kontroll- und Steuereinheit (nicht abgebildet). Die Wandfläche 14 stellt einen Ausschnitt einer Garbehälterabdeckung dar und enthält eine Einlassung 16, in die ein Magnet 18 eingeführt werden kann. Zur einfacheren und sicheren Positionierung des Griffs 6 des Garprozessfühlers 1 ist der Bereich der Auflage unterhalb des Magneten 18 mit einer dauerhaften Markierung (nicht abgebildet) versehen.

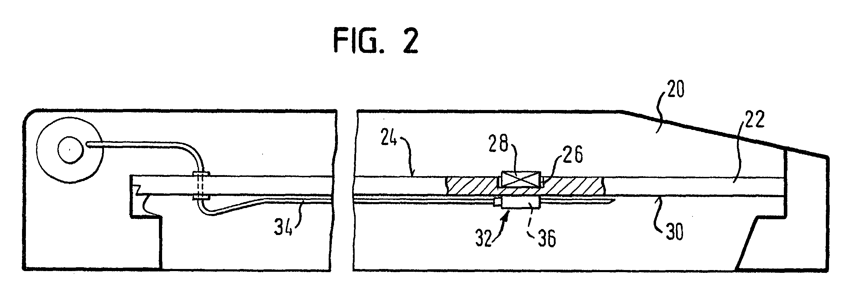

Der Figur 2 ist die Seitenansicht eines Garbehälterdeckels 20 im Querschnitt zu entnehmen. Die Innenwandung 22 des Behälterdeckels 20 weist auf ihrer nach außen gewandten Seite 24 eine Einlassung 26 zur Aufnahme eines Permanent- oder Elektromagneten 28 auf. In dem Bereich des Magneten 28 liegt an der Innenseite 30 der Innenwandung 22 ein Garprozessfühler 32, der in seinem Griff über einen Bereich mit magnetisierbarem Material 36 verfügt (nicht abgebildet), magnetisch befestigt vor. Dieser Garprozessfühler 32 ist über eine Kabelverbindung 34 mit einer Steuer- und Kontrolleinheit (nicht abgebildet) verbunden. Nach Öffnen des Gargerätes durch Anheben des Behälterdeckels 20 steht der Garprozessfühler 32 unmittelbar zur Verfügung. Nach seinem Gebrauch kann er auf sichere und einfache Weise wieder an seine Halteposition angelegt werden. Da sich das Befestigungsareal nicht räumlich von der umliegenden Oberfläche der Innenwandung abhebt, bereitet eine Reinigung dieses Bereichs keine besonderen Schwierigkeiten. Von Vorteil ist weiterhin, daß, sofern z.B. in dem Garprozessfühler ein Temperatur- oder Feuchtesensor untergebracht ist, hiermit auch die Temperatur bzw. der Feuchtegehalt im Garbehälterinnenraum bei geschlossenem Behälterdeckel bestimmt werden kann, ohne daß es zusätzlicher Sensoren bedarf.

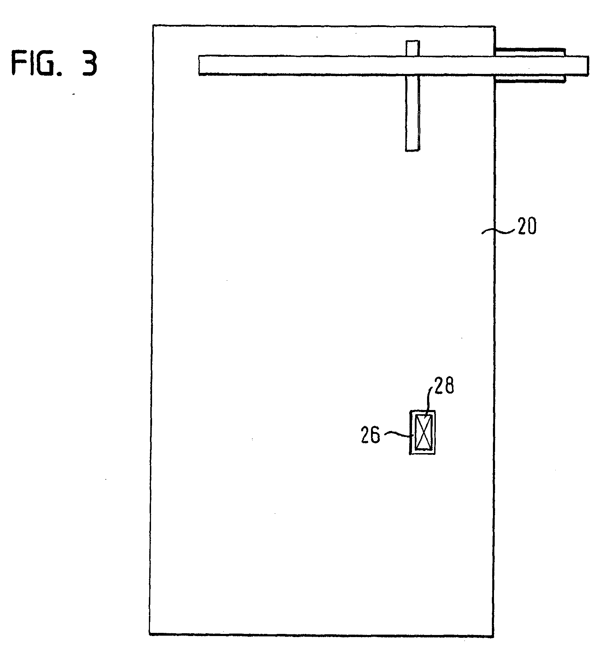

Fig. 3 zeigt Teile des Behälterdeckels 20 gemäß Fig. 2 in Draufsicht und veranschaulicht die Positionierung des in der Einlassung 26 der Innenwandung 22 vorliegenden Magneten 28.

Die in der vorstehenden Beschreibung, den Ansprüchen sowie den Zeichnungen offenbarten Merkmale der Erfindung können sowohl einzeln als auch in jeder beliebigen Kombination und für die Verwirklichung der Erfindung in ihren verschiedenen Ausführungsformen wesentlich sein.

### Bezugszeichenliste

- 1: Garprozessfühler
- 2: Spitze
- 4: Einführende
- 6: Griff
- 8: Schicht aus magnetischem Material
- 10: Griffhülle
- 12: Kabel
- 14: Wandausschnitt
- 16: Einlassung in den Wandausschnitt 14
- 18: Magnet
- 20: Garbehälterdeckel
- 22: Innenwandung des Garbehälterdeckels 20
- 24: Aussenseite der Innenwandung 22
- 26: Einlassung in die Innenwandung 22
- 28: Magnet
- 30: Innenseite der Innenwandung 22
- 32: Garprozessfühler
- 34: Kabelverbindung
- 36: Bereich mit magnetisierbarem Material

## Patentansprüche

1. Garprozessfühler mit mindestens einer Spitze und einem Griff, umfassend mindestens einen Sensor für eine Gargutgröße, insbesondere der Kerntemperatur eines Gargutes, **dadurch gekennzeichnet, daß**
der Garprozessfühler (1, 32), zumindest an und/oder in einem Gargerät, magnetisch befestigbar ist.

2. Garprozessfühler nach Anspruch 1, **dadurch gekennzeichnet, daß**
der Garprozessfühler (1, 32) im und/oder am Griff (6) und/oder in und/oder an der Spitze (2) mindestens einen, insbesondere austauschbaren, Permanentmagneten und/oder, insbesondere steuerbaren, Elektromagneten (8) und/oder mindestens einen Bereich aus, insbesondere austauschbarem, magnetisierbarem Material (36) für die Befestigung an einer magnetischen oder magnetisierbaren Halterung (18, 28) an dem Gargerät umfasst.

3. Garprozessfühler nach Anspruch 2, **dadurch gekennzeichnet, daß**
der Griff (6) oder die Spitze (2) zumindest segmentweise Permanent- oder Elektromagnetmaterial (8) oder magnetisierbares Material (36) enthält oder, zumindest abschnittsweise, vollständig oder nahezu vollständig, kontinuierlich oder diskontinuierlich mit mindestens einem Permanent- oder Elektromagneten (8) oder mit magnetisierbarem Material (36) ummantelt ist.

4. Garprozessfühler nach Anspruch 2 oder 3, **dadurch gekennzeichnet, daß**
das magnetisierbare Material und/oder der Permanent- oder Elektromagnet und/oder der Wirkbereich des magnetisierbaren Materials und/oder des Permanent- oder Elektromagneten des Garprozessfühlers optisch und/oder haptisch identifizierbar ist.

5. Gargerät, umfassend mindestens einen Garbehälter, vorzugsweise mit Garbehälterdeckel, **dadurch gekennzeichnet, daß**
das Gargerät, insbesondere der Garbehälterdeckel (20), innen- und/oder aussenseitig mindestens einen Bereich aus magnetisierbarem Material (36) und/oder mindestens einen, insbesondere austauschbaren, Permanent- und/oder, insbesondere steuerbaren, Elektromagneten (18, 28), insbesondere für die mittelbare oder unmittelbare magnetische Befestigung eines Garprozessfühlers (1, 32) gemäß einem der Ansprüche 1 bis 4, umfasst.

6. Gargerät nach Anspruch 5, **dadurch gekennzeichnet, daß**
das magnetisierbare Material und/oder der Permanent- oder Elektromagnet und/oder der Wirkbereich des magnetisierbaren Materials und/oder des Permanent- oder Elektromagneten des Gargeräts optisch und/oder haptisch identifizierbar ist.

7. Garbehälterdeckel, **dadurch gekennzeichnet, daß**
der Garbehälterdeckel (20) innen- und/oder aussenseitig mindestens einen Bereich aus magnetisierbarem Material und/oder mindestens einen, insbesondere austauschbaren, Permanent- und/oder, insbesondere steuerbaren, Elektromagneten (18, 28), insbesondere für die mittelbare oder unmittelbare magnetische Befestigung eines Garprozessfühlers (1, 32) gemäß einem der Ansprüche 1 bis 4, umfasst.

8. Garbehälterdeckel nach Anspruch 7, **dadurch gekennzeichnet, daß**
das magnetisierbare Material und/oder der Permanent- oder Elektromagnet (18, 28) und/oder der Wirkbereich des magnetisierbaren Materials und/oder des Permanent- oder Elektromagneten des Garbehälterdeckels optisch und/oder haptisch identifizierbar ist.
